# EUROPÄISCHE PATENTSCHRIFT

(11) **EP 3 722 385 B1**
(45) Veröffentlichungstag und Bekanntmachung des Hinweises auf die Patenterteilung: **26.02.2025**
(21) Anmeldenummer: 20162654.6
(22) Anmeldetag: 12.03.2020
(51) Int. Cl.: C09D 183/04, C08G 77/12, C08G 77/20, C08G 77/46

(54) **SILIKONE UND SILIKON-LACKE ZUR OBERFLÄCHENBEHANDLUNG VON POLYMERISIERBAREN MATERIALIEN IN DER MEDIZINTECHNIK, INSBESONDERE IM HÖRGERÄTEAKUSTIK-BEREICH**
SILICONES AND SILICONE PAINTS FOR SURFACE TREATMENT OF POLYMERIZABLE MATERIALS IN MEDICAL TECHNOLOGY, IN PARTICULAR HEARING AID ACOUSTICS
SILICONES ET PEINTURES AU SILICONE POUR LE TRAITEMENT DE SURFACE DE MATÉRIAUX POLYMÉRISABLES DANS LA TECHNIQUE MÉDICALE, EN PARTICULIER DANS LE DOMAINE DE L'ACOUSTIQUE D'APPAREILS AUDITIFS

(30) Priorität: 12.04.2019 DE 102019109729
(43) Veröffentlichungstag der Anmeldung: 14.10.2020
(73) Patentinhaber: Dreve ProDiMed GmbH, 59423 Unna (DE)
(72) Erfinder: Veit, Thomas, Dr., 48151 Münster (DE); Civelek, Emre, 59192 Bergkamen (DE)
(74) Vertreter: Köchling, Conrad-Joachim

(56) Entgegenhaltungen:
- EP-A1- 1 777 264

## Beschreibung

Die Erfindung betrifft die Herstellung und Verwendung einer Zusammensetzung und eines Lackes zur Oberflächenbehandlung von polymerisierbaren Materialien, insbesondere auf der Basis von Polyorganosiloxanen. Die Erfindung betrifft Silikone und Lacke zur Oberflächenbehandlung von Silikonen, die in der Medizintechnik Verwendung finden. Besonders betrifft die Erfindung Silikone und Lacke zur Oberflächenbehandlung von Silikonen, die im Dental- und im Hörgeräteakustik-Bereich Verwendung finden, beispielhaft genannt sind hier Silikone für Lärmschutz und Silikone für Schwimmschutz.

Dieser Stand der Technik ist aus der EP 1 777 264 A1 bekannt.

### Stand der Technik:

Für die Herstellung von Lärm- und Schwimmschutz-Otoplastiken aus Silikon kommen zurzeit sowohl indirekte als auch direkte Verfahren zum Einsatz. Da die Anforderungen an den Tragekomfort sehr hoch sind, ist die Formtreue und Passgenauigkeit der Silikon-Otoplastik von großer Bedeutung. Als besonders geeignet haben sich additionsvernetzende Silikone erwiesen, die nur einen geringen Schrumpf aufweisen und daher besonders dimensionsstabil sind.

Additionsvernetzende Silikone bestehen nach dem Stand der Technik aus den folgenden Komponenten (alle oder eine Kombination aus diesen Komponenten):
(1) Polyorganosiloxane mit mindestens zwei ungesättigten Gruppen im Molekül (gemeint sind Vinyl-Gruppen)
(2) Polyorganohydrogensiloxane mit mindestens zwei SiH-Gruppen im Molekül (ohne Vinyl-Gruppen)
(3) Polyorganosiloxane ohne reaktive Gruppen (also weder Vinyl-Gruppen noch SIH-Gruppen)
(4) Edelmetall-Katalysator(en)
(5) Verstärkende Füllstoffe, mit beladener oder unbeladener Oberfläche
(6) Nichtverstärkende Füllstoffe
(7) Öle oder andere Weichmacher
(8) Weitere Additive und übliche Zusatz-, Hilfs- und Farbstoffe
(9) Inhibitoren

Bei den Verbindungen nach (1) handelt es sich um Polyorganosiloxane mit endständigen und/oder seitenständigen reaktiven Gruppen mit einer Viskosität bei 23 °C von etwa 50 mPa·s bis 165.000 mPa·s, bevorzugt 200 mPa·s bis 65.000 mPa·s.

Die Verbindungen nach (2) enthalten reaktive SiH-Gruppen, die in einer Additionsreaktion unter Edelmetall-Katalyse mit den Verbindungen (1) das Polymer aufbauen.

Zu den Verbindungen nach (3) gehören die Silikon-Öle, welche wie die Verbindungen nach (1) Polyorganosiloxane sind, aber keine reaktiven Gruppen enthalten und somit nicht an der edelmetallkatalysierten Additionsvernetzungsreaktion beteiligt sind. Derartige Verbindungen sind beispielsweise in W. Noll "Chemie und Technologie der Silikone", Verlag Chemie Weinheim, 1968 beschrieben.

Der Edelmetallkatalysator (4) ist bevorzugt ein Platin-Komplex, besonders gut geeignet sind Platin-Siloxan-Komplexe, wie sie bereits in US-A-3 715 334, US-A-3 775 352 und US-A-3 814 730 beschrieben sind. Für strahlenhärtende Silikonzusammensetzungen eignen sich insbesondere UV-aktive Platin-Komplexe, wie in EP 0 122 008 A1 und in DE 10 2008 000 156 A1 bereits beschrieben.

Verstärkende Füllstoffe nach (5) haben in der Regel eine BET-Oberfläche von größer als 50 m²/g. Hierzu gehören z.B. pyrogene oder gefällte Kieselsäuren und Siliziumaluminiummischoxide. Die genannten Füllstoffe können durch Oberflächenbehandlung mit z.B. Hexamethyldisilazan oder Organosiloxanen bzw. Organosilanen hydrophobiert sein.

Die nicht verstärkenden Füllstoffe nach (6) habe eine BET-Oberfläche von bis zu 50 m²/g. Hierzu gehören die Quarze, Cristobalite, Diatomeenerden, Kieselgure, Calciumcarbonate, Talkum, Zeolithe, Natriumaluminiumsilikate, Metalloxid- und Glaspulver. Auch diese Füllstoffe können gleichermaßen wie die verstärkenden Füllstoffe durch Oberflächenbehandlung hydrophobiert sein.

Als Verbindung nach (7) kommen beispielsweise Kohlenwasserstoffe in Frage, besonders bevorzugt sind Paraffin-Öle und Isoeicosane.

Weiterhin können als Additive Farbpigmente und weitere Hilfsmittel wie z.B. feinverteiltes Platin oder Palladium als Wasserstoff-Absorber enthalten sein. Zur Steuerung der Reaktivität kann es notwendig sein, Inhibitoren (9) einzusetzen. Solche Inhibitoren sind bekannt und z.B. in US-A-3 933 880 beschrieben. In der Regel handelt es sich hier um acetylenisch ungesättigte Alkohole oder vinylgruppenhaltige Poly-, Oligo- und Disiloxane.

Die Massen werden bevorzugt in zwei Komponenten formuliert, um Lagerstabilität zu gewährleisten. Der gesamte Gehalt an Edelmetall-Katalysatoren (4) ist in der ersten Katalysator-Komponente, der gesamte Gehalt an SiH-Verbindungen (2) ist in der zweiten, räumlich von der ersten Komponente getrennten Komponente enthalten. Durch Vermischen der beiden Komponenten härten die Massen in einer als Hydrosilylierung bekannten Additionsreaktion aus. Je nach Auswahl der Edelmetall-Katalysatoren (4) (UV-aktiv oder -inaktiv) und Zugabe der Inhibitoren (9) kann die Reaktion zeitlich beschleunigt (mit oder ohne UV-Strahlung) oder gebremst werden.

Die Volumenverhältnisse der beiden Komponenten können 10:1 bis 1:10 betragen. Besonders bevorzugt sind Volumen-Mischverhältnisse von 1:1, 4:1, 5:1 und 10:1 (Basis- zu Katalysator-Komponente).

Silikon-Otoplastiken werden teilweise nach dem Stand der Technik mit einem Lack als Oberflächen-Finish lackiert. Ein solcher Lack hat folgende Zusammensetzung:
(1) Polyorganosiloxane mit mindestens zwei ungesättigten Gruppen im Molekül
(2) Polyorganohydrogensiloxane mit mindestens zwei SiH-Gruppen im Molekül
(3) Polyorganosiloxane ohne reaktive Gruppen
(4) Edelmetall-Katalysator(en)
(5) Verstärkende Füllstoffe, mit beladener oder unbeladener Oberfläche
(6) Inhibitoren
(7) Organische Lösungsmittel

Für die Verbindungen (1) bis (6) gelten die zuvor aufgezählten Punkte. Auch dieser Lack ist ein ZweiKomponenten-Material und die gemachten Anmerkungen gelten hier ebenso. Die organischen Lösungsmittel, die erfindungsgemäß Verwendung finden, haben einen Siedepunkt bei 1013 hPa im Bereich von 40-200 °C, bevorzugt im Bereich von 70-170 °C, besonders bevorzugt im Bereich von 100-165 °C. In Frage kommen cyclische und aliphatische Kohlenwasserstoffe sowie Moleküle aus dem Bereich der Siloxane. Beispielhaft können Cyclohexan, n-Hexan, n-Heptan, Toluol, Benzin, Hexamethyldisiloxan oder Octamethyltrisiloxan genannt werden.

Silikon-Otoplastiken in Form von Lärm- oder Schwimmschutz werden in der Regel über einen längeren Zeitraum im Ohr getragen. Es ist daher in besonderer Weise auf Hygiene zu achten. Der Einsatz von Silikonen im Bereich von Lärm- und Schwimmschutz ist bekannt, denn die Silikone bieten ein breites Spektrum an mechanischen und physikalischen Eigenschaften an und haben den weiteren Vorteil, dass sie keine oder nur geringe toxische, sensibilisierende oder allergene Potentiale besitzen. Dies macht sie für medizinische Anwendungen sehr gut geeignet. Die Passgenauigkeit von Otoplastiken spielt dabei eine besondere Rolle. Die Otoplastik steht in unmittelbarem Kontakt zur Haut des Ohres. Das feuchte und warme Milieu im Gehörgang bietet geradezu ideale Voraussetzungen für das Wachstum von Mikroorganismen (Bakterien, Viren, Pilze, Algen), von denen bekannt ist, dass sie sich auf Silikonen ansiedeln können. Dies beeinträchtigt nicht nur die Hygiene, sondern auch die Ästhetik von Otoplastiken, die von Menschen zum Zweck des Lärm-Schutzes z.B. bei der Ausübung ihres Berufes oder als Schwimm-Schutz beim Schwimmsport über einen längeren Zeitraum im Ohr getragen werden. Insbesondere kann es zu Entzündungen kommen, wenn durch Druckstellen (wegen ungenügender Passgenauigkeit der Otoplastik) oder Reibung durch Kaubewegungen die Haut des Gehörgangs gereizt wird. Ein weiterer wichtiger Punkt bezüglich der Hygiene ist die Staubanziehung üblicher Silikone, welche im täglichen Gebrauch ein Problem darstellt.

Aufgrund der aufgezählten Punkte ist die Einstellung eines antistatischen, biokompatiblen und mechanisch belastbaren Lackes aus Silikon in Form einer Polymerisationsreaktion (Raumtemperaturvernetzend oder UV-Strahlungsvernetzend) wünschenswert.

Antistatische Silikone sind seit vielen Jahren bekannt. Sie werden auf Halbleiter-, Elektronik- und Anzeigegeräten, bei welchen Probleme der statischen Elektrizität entstehen können, als Trennfilm genutzt. Beispiele dafür wurden beschrieben von Toray Saehan Inc. in WO2008114916A1*,* welche die antistatischen Eigenschaften durch das Polymerisieren von Polythiophenen oder Derivaten erhalten und von Shin-Etsu Polymer Co. Ltd. in EP2894207A1*,* welche mindestens eine aminartige Verbindung, ausgewählt aus der Gruppe bestehend aus einem sekundären Amin, einem tertiären Amin oder einem quartären Ammoniumsalz mit einem Gegenanion beinhaltet. Weitere Silikone mit antistatischen Eigenschaften, welche durch Zugabe von leitfähigen Additiven erzeugt werden, wurden von Shin-Etsu durch die Zugabe von Molekülen mit Epoxy und Vinyl Einheiten in WO2016093124A1*,* durch den Einsatz von verschiedenen Lithiumsalzen in US20080260981A1 und durch den Einsatz von sekundären und tertiären Aminen oder quartären Ammoniumsalzen, welche positiv geladen sind und ein Gegenanion beinhalten (sogenannte ionische Flüssigkeiten) in US9624398B2 beschrieben. Antimikrobielle antistatische Erzeugnisse wurden auch schon vor über 20 Jahren von Dow Corning Toray Co. Ltd. in EP0233954B1 beschrieben.

Alle genannten und veröffentlichten Additive mit antistatischen Eigenschaften erfüllen aber nicht die hohen Anforderungen, die an polymerisierbare Materialien zu stellen sind, die wie z.B. Lärm- und Schwimmschutz-Otoplastiken über einen längeren Zeitraum im Ohr getragen werden:
- Das antistatische Additiv darf nicht toxisch sein und kein sensibilisierendes oder allergenes Potential besitzen oder darf innerhalb der gesamten Zusammensetzungen nicht toxisch sein und kein sensibilisierendes oder allergenes Potential besitzen.
- Das antistatische Additiv sollte in genügend großer Menge in der polymerisierbaren Masse enthalten sein, um seine Wirkung an der Materialoberfläche ausüben zu können.
- Das antistatische Additiv darf die Polymerisationsreaktion nicht inhibieren und die typischen Eigenschaften des Polymerisats nicht verändern.

Das Ziel der Erfindung ist es daher ein Material für Otoplastiken, vor allem für Lärm- und Schwimmschutz, bereitzustellen, das biokompatible und antistatische Eigenschaften besitzt, gleichzeitig hochbelastbar und ohne die erwähnten negativen Eigenschaften vorliegt. Dieses Ziel wird durch die Verwendung der richtigen Konzentration eines oder mehrerer antistatischer Additive und der dazugehörigen Silikonzusammensetzung erreicht. Während das antistatische Additiv für die antistatischen Eigenschaften zuständig ist, stellt die richtige Silikonzusammensetzung die mechanisch hochbelastbaren Eigenschaften dar. Die richtige Konzentration des antistatischen Additivs trägt dazu bei, dass einerseits die Biokompabilität des Silikons gegeben ist und andererseits die antistatischen Eigenschaften für die Verwendung ausreichend gut sind.

Ziel dieser Erfindung ist es zusätzlich, auch einen entsprechenden Lack auf Silikonbasis bereitzustellen. Dieses Ziel wird in gleicher Weise durch die Verwendung eines oder mehrerer antistatischer Additive zum Lack erreicht. Dieser antistatische Lack zur Oberflächenbehandlung von Silikonen sollte sowohl durch klassische Pinsel- und Tauchverfahren als auch durch Sprühverfahren (manuell mittels Airbrush-Technik oder maschinell mit z.B. der automatischen Lackieranlage DACS der Firma Dreve Otoplastik GmbH)anwendbar sein. Die Erfindung löst die Aufgabe durch die in den Patentansprüchen angegebene Zusammensetzung und Verwendung.

Wichtig ist in diesem Zusammenhang das Vorhandensein einer zuverlässigen und reproduzierbaren Messmethode der antistatischen Eigenschaft von Kunststoffoberflächen im Allgemeinen, besonders aber von Silikonoberflächen.

Der sicherste Indikator für die antistatische Eigenschaft von Kunststoffoberflächen im Allgemeinen, besonders aber von Silikonoberflächen ist der Oberflächenwiderstand, der in direktem Zusammenhang mit der Leitfähigkeit steht, da die aktuelle Aufladung des Kunststoffes/Silikons das Messergebnis nicht verfälscht. Aus dem Oberflächenwiderstand lassen sich direkt Rückschlüsse auf die Aufladbarkeit und damit auch auf die Neigung des Kunststoffes/Silikons zur Staubpartikelanziehung ziehen (aus der Betriebsanleitung des MECO Antistatik-Tester MGT-4).

Überraschenderweise hat sich herausgestellt, dass sich polymerisierbare Massen, insbesondere auf der Basis von Polyorganosiloxanen, durch den Zusatz eines oder mehrerer antistatischer Additive antistatisch einstellen lassen und dabei die wesentlichen Eigenschaften der Massen durch den Zusatz unbeeinflusst bleiben:
- unveränderte Lagerstabilität
- unveränderte Verarbeitungs- und Aushärtezeiten
- unveränderte Härte
- unveränderte Viskositäten
- unveränderte Bearbeitbarkeit

Die Oberflächenbeschaffenheit bleibt unverändert. Die Oberfläche weist aber antistatische Eigenschaften auf, wodurch Staub- und Schmutzpartikel nicht angezogen werden und sich eindeutig weniger auf der Oberfläche anlagern. Auf der Oberfläche angelagerte Staubpartikel können durch das Pusten oder Wegstreichen problemlos entfernt werden. Silikonzusammensetzungen ohne antistatische Eigenschaften ziehen im Vergleich eindeutig mehr Staub an, wie es für Silikon bekannt ist. Diese können nicht durch das Pusten oder Wegstreichen problemlos entfernt werden.

Bei den antistatischen Additiven handelt es sich um Polyether-modifizierte Siloxane, die oberflächenaktive Trisiloxane sind, wie sie beispielsweise bei Gelest und Evonik Industries AG und Momentive erhältlich sind. Beispielhaft zu nennen sind die Produkte MCS-E15, MCR-E21 und MCR-E11(Propylether modifizierte Siloxane) von Gelest und die TEGOPREN Produkte TEGOPREN 5803, TEGOPREN 5840, TEGOPREN 5852, TEGOPREN 5857, TEGOPREN 5863, TEGOPREN 5864, TEGOPREN 5884, TEGOPREN 5884-35 von Evonik Industries AG. Außerdem nennenswert sind die Silwet Produkte von Momentive L-77 und L-7280. Die antistatischen Wirkungsweisen dieser Additive sind dem Fachmann bekannt und können in der einschlägigen Literatur nachverfolgt werden. Von Bedeutung ist insbesondere die Konzentration dieser Additive. Dabei gilt, je höher die Zugabe des Trisiloxans, umso stärker ist der antistatische Effekt in der Silikonzusammensetzung.

Die Polyether-modifizierten Siloxane sind oberflächenaktive Trisiloxane mit einem hydrophoben Siloxan-Anteil (30-50 Gew.%) und einem hydrophilen Anteil aus Ethylen- und/oder Propylenoxid (50-70 Gew. %).

Die genannten Polyethersiloxane sind oberflächenaktive Trisiloxane. Es handelt sich hierbei um kleine, daher sehr mobile Moleküle. Sie wechselwirken zweifach und sind für den antistatischen Effekt notwendig:
Wechselwirkung des hydrophoben Siloxan-Anteils mit der verwendeten Grundmischung, die aus vinylfunktionellen Polydimethylsiloxanen und speziellen Füllstoffen zusammengesetzt ist. Dadurch wird die Einarbeitung des Polyethersiloxans in die Silikonmatrix des Silikonlackes ohne eine Verdickung (Viskositätserhöhung) bei gewählter Konzentration ermöglicht. Diese wäre für die Anwendung als Lack ungünstig.
- Wechselwirkung des hydrophilen Anteils (Ethylen- und/oder Propylenoxid-Anteile) mit der Feuchtigkeit der Luft, dadurch wird die Silikonoberfläche befeuchtet und somit leitfähig. Ladungen können leichter abfließen und die Oberfläche wird dadurch antistatisch. Die derart beschichtete Oberfläche kann weder elektrische Ladung aufbauen noch sie halten.

Die folgenden Ausführungsbeispiele dienen der genaueren Beschreibung der Erfindung, sie sind sehr detailliert und sollen die Erfindung in keiner Weise einschränken.

### Beispiel 1: transparentes Silikon-Material (Vergleichsbeispiel)

### Katalysator-Komponente

1,9 Gew.-% vinylendgestopptes Polydimethylsiloxan mit einer Viskosität von 200 mPa s
1,9 Gew.-% vinylendgestopptes Polydimethylsiloxan mit einer Viskosität von 1.000 mPa s
2,8 Gew.-% vinylendgestopptes Polydimethylsiloxan mit einer Viskosität von 10.000 mPa s
50,4 Gew.-% vinylendgestopptes Polydimethylsiloxan mit einer Viskosität von 65.000 mPa s
8,9 Gew.-% eines Polydimethylsiloxan-Öls mit einer Viskosität von 50 mPa s
12,0 Gew.-% eines Paraffin-Öls
21,7 Gew.-% einer pyrogenen Kieselsäure (oberflächenbehandelt) mit einer BET-Oberfläche zwischen 150 und 200 m²/g
0,4 Gew.-% eines Platin-Katalysators
werden vorgelegt und 30 Minuten lang homogen gemischt. Die Mischung wird anschließend 15 Minuten lang im Vakuum entgast.

### Basis-Komponente

1,9 Gew.-% vinylendgestopptes Polydimethylsiloxan mit einer Viskosität von 200 mPa s
1,9 Gew.-% vinylendgestopptes Polydimethylsiloxan mit einer Viskosität von 1.000 mPa s
2,9 Gew.-% vinylendgestopptes Polydimethylsiloxan mit einer Viskosität von 10.000 mPa s
49,6 Gew.-% vinylendgestopptes Polydimethylsiloxan mit einer Viskosität von 65.000 mPa s
3,1 Gew.-% eines Polydimethylsiloxan-Öls mit einer Viskosität von 50 mPa s
7,6 Gew.-% eines Paraffin-Öls
21,2 Gew.-% einer pyrogenen Kieselsäure (oberflächenbehandelt) mit einer BET-Oberfläche zwischen 150 und 200 m²/g
11,8 Gew.-% eines Polymethylhydrogensiloxans mit einem SiH-Gehalt von 2,3 mmol/g
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt. Es wird ein ausgehärteter Probekörper mit einer Endhärte von 40 Shore A und hervorragenden mechanischen Eigenschaften (Reißfestigkeit, Reißdehnung) erhalten. Oberflächenwiderstand: >1*10¹²Ω (nicht antistatisch).

### Beispiel 2: transparenter Silikon-Lack (Vergleichsbeispiel)

### Katalysator-Komponente

67,6 Gew.-% Hexamethyldisiloxan mit einer Viskosität von 0,5 mPa s
13,5 Gew.-% eines Polydimethylsiloxan-Öls mit einer Viskosität von 10 mPa s
18,9 Gew.-% eines Platin-Katalysators
werden vorgelegt und 30 Minuten lang homogen gemischt.

### Basis-Komponente

9,0 Gew.-% vinylendgestopptes Polydimethylsiloxan mit einer Viskosität von 200 mPa s
3,4 Gew.-% vinylendgestopptes Polydimethylsiloxan mit einer Viskosität von 1.000 mPa s
4,9 Gew.-% vinylendgestopptes Polydimethylsiloxan-Harz mit einer Viskosität von 1.000 mPa s
15,5 Gew.-% vinylendgestopptes Polydimethylsiloxan mit einer Viskosität von 10.000 mPa s
40,8 Gew.-% Hexamethyldisiloxan mit einer Viskosität von 0,5 mPa s
15,9 Gew.-% eines Polydimethylsiloxan-Öls mit einer Viskosität von 10 mPa s
6,6 Gew.-% einer pyrogenen Kieselsäure (oberflächenbehandelt) mit einer BET-Oberfläche zwischen 150 und 200 m²/g
3,9 Gew.-% eines Polymethylhydrogensiloxans mit einem SiH-Gehalt von 7,3 mmol/g
werden vorgelegt und 30 Minuten lang homogen gemischt.

### Mischung von Katalysator- und Basiskomponente

1 Teil der Katalysator-Komponente und 10 Teile der Basis-Komponente werden über einen statischen Mischer homogen gemischt. Es wird ein ausgehärteter Probekörper mit einer Endhärte von 25 Shore A erhalten. Die mechanischen Eigenschaften sind unzureichend und können nicht eindeutig nachgewiesen werden. Oberflächenwiderstand: >1*10¹² Ω (nicht antistatisch).

### Beispiel 3: transparentes Silikon-Material (erfindungsgemäß)

### Katalysator-Komponente

2,0 Gew.-% vinylendgestopptes Polydimethylsiloxan mit einer Viskosität von 200 mPa s
2,0 Gew.-% vinylendgestopptes Polydimethylsiloxan mit einer Viskosität von 1.000 mPa s
2,6 Gew.-% vinylendgestopptes Polydimethylsiloxan mit einer Viskosität von 10.000 mPa s
50,4 Gew.-% vinylendgestopptes Polydimethylsiloxan mit einer Viskosität von 65.000 mPa s
8,9 Gew.-% eines Polydimethylsiloxan-Öls mit einer Viskosität von 50 mPa s
11,9 Gew.-% eines Paraffin-Öls
21,7 Gew.-% einer pyrogenen Kieselsäure (oberflächenbehandelt) mit einer BET-Oberfläche zwischen 150 und 200 m²/g
0,4 Gew.-% eines Platin-Katalysators
0,1 Gew.-% Polyethersiloxan, nämlich Trisiloxan
werden vorgelegt und 30 Minuten lang homogen gemischt. Die Mischung wird anschließend 15 Minuten lang im Vakuum entgast.

### Basis-Komponente

2,0 Gew.-% vinylendgestopptes Polydimethylsiloxan mit einer Viskosität von 200 mPa s
2,0 Gew.-% vinylendgestopptes Polydimethylsiloxan mit einer Viskosität von 1.000 mPa s
2,7 Gew.-% vinylendgestopptes Polydimethylsiloxan mit einer Viskosität von 10.000 mPa s
49,6 Gew.-% vinylendgestopptes Polydimethylsiloxan mit einer Viskosität von 65.000 mPa s
3,1 Gew.-% eines Polydimethylsiloxan-Öls mit einer Viskosität von 50 mPa s
7,5 Gew.-% eines Paraffin-Öls
21,2 Gew.-% einer pyrogenen Kieselsäure (oberflächenbehandelt) mit einer BET-Oberfläche zwischen 150 und 200 m²/g
11,8 Gew.-% eines Polymethylhydrogensiloxans mit einem SiH-Gehalt von 2,3 mmol/g
0,1 Gew.-% Polyethersiloxan, nämlich Trisiloxan werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt. Es wird ein ausgehärteter Probekörper mit einer Endhärte von 40 Shore A und hervorragenden mechanischen Eigenschaften (Reißfestigkeit, Reißdehnung) erhalten. Oberflächenspannung: 5*10⁹ Ω (antistatisch).

### Beispiel 4: transparentes Silikon-Material (erfindungsgemäß)

### Katalysator-Komponente

3,0 Gew.-% vinylendgestopptes Polydimethylsiloxan mit einer Viskosität von 200 mPa s
2,0 Gew.-% vinylendgestopptes Polydimethylsiloxan mit einer Viskosität von 1.000 mPa s
1,6 Gew.-% vinylendgestopptes Polydimethylsiloxan mit einer Viskosität von 10.000 mPa s
50,4 Gew.-% vinylendgestopptes Polydimethylsiloxan mit einer Viskosität von 65.000 mPa s
8,9 Gew.-% eines Polydimethylsiloxan-Öls mit einer Viskosität von 50 mPa s
11,8 Gew.-% eines Paraffin-Öls
21,7 Gew.-% einer pyrogenen Kieselsäure (oberflächenbehandelt) mit einer BET-Oberfläche zwischen 150 und 200 m²/g
0,4 Gew.-% eines Platin-Katalysators
0,2 Gew.-% Polyethersiloxan, nämlich Trisiloxan werden vorgelegt und 30 Minuten lang homogen gemischt. Die Mischung wird anschließend 15 Minuten lang im Vakuum entgast.

### Basis-Komponente

2,0 Gew.-% vinylendgestopptes Polydimethylsiloxan mit einer Viskosität von 200 mPa s
2,0 Gew.-% vinylendgestopptes Polydimethylsiloxan mit einer Viskosität von 1.000 mPa s
2,7 Gew.-% vinylendgestopptes Polydimethylsiloxan mit einer Viskosität von 10.000 mPa s
49,6 Gew.-% vinylendgestopptes Polydimethylsiloxan mit einer Viskosität von 65.000 mPa s
3,1 Gew.-% eines Polydimethylsiloxan-Öls mit einer Viskosität von 50 mPa s
7,4 Gew.-% eines Paraffin-Öls
21,2 Gew.-% einer pyrogenen Kieselsäure (oberflächenbehandelt) mit einer BET-Oberfläche zwischen 150 und 200 m²/g
11,8 Gew.-% eines Polymethylhydrogensiloxans mit einem SiH-Gehalt von 2,3 mmol/g
0,2 Gew.-% Polyethersiloxan, nämlich Trisiloxan
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt. Es wird ein ausgehärteter Probekörper mit einer Endhärte von 40 Shore A und hervorragenden mechanischen Eigenschaften (Reißfestigkeit, Reißdehnung) erhalten. Oberflächenspannung: 2*10⁹ Ω (antistatisch).

### Beispiel 5: transparentes Silikon-Material (erfindungsgemäß)

### Katalysator-Komponente

3,0 Gew.-% vinylendgestopptes Polydimethylsiloxan mit einer Viskosität von 200 mPa s
2,0 Gew.-% vinylendgestopptes Polydimethylsiloxan mit einer Viskosität von 1.000 mPa s
1,6 Gew.-% vinylendgestopptes Polydimethylsiloxan mit einer Viskosität von 10.000 mPa s
50,4 Gew.-% vinylendgestopptes Polydimethylsiloxan mit einer Viskosität von 65.000 mPa s
9,0 Gew.-% eines Polydimethylsiloxan-Öls mit einer Viskosität von 50 mPa s
11,6 Gew.-% eines Paraffin-Öls
21,7 Gew.-% einer pyrogenen Kieselsäure (oberflächenbehandelt) mit einer BET-Oberfläche zwischen 150 und 200 m²/g
0,4 Gew.-% eines Platin-Katalysators
0,3 Gew.-% Polyethersiloxan, nämlich Trisiloxan werden vorgelegt und 30 Minuten lang homogen gemischt. Die Mischung wird anschließend 15 Minuten lang im Vakuum entgast.

### Basis-Komponente

4,0 Gew.-% vinylendgestopptes Polydimethylsiloxan mit einer Viskosität von 200 mPa s
2,7 Gew.-% vinylendgestopptes Polydimethylsiloxan mit einer Viskosität von 10.000 mPa s
49,6 Gew.-% vinylendgestopptes Polydimethylsiloxan mit einer Viskosität von 65.000 mPa s
3,1 Gew.-% eines Polydimethylsiloxan-Öls mit einer Viskosität von 50 mPa s
7,3 Gew.-% eines Paraffin-Öls
21,2 Gew.-% einer pyrogenen Kieselsäure (oberflächenbehandelt) mit einer BET-Oberfläche zwischen 150 und 200 m²/g
11,8 Gew.-% eines Polymethylhydrogensiloxans mit einem SiH-Gehalt von 2,3 mmol/g
0,3 Gew.-% Polyethersiloxan, nämlich Trisiloxan
werden vorgelegt und 30 Minuten lang homogen gemischt. Die Mischung wird anschließend 15 Minuten lang im Vakuum entgast.

### Mischung von Katalysator- und Basiskomponente

50 Teile der Katalysator-Komponente und 50 Teile der Basis-Komponente werden aus einer Doppelkartusche gefördert und über einen statischen Mischer homogen gemischt. Es wird ein ausgehärteter Probekörper mit einer Endhärte von 40 Shore A und hervorragenden mechanischen Eigenschaften (Reißfestigkeit, Reißdehnung) erhalten. Oberflächenspannung: 2*10⁹ Ω (antistatisch).

### Beispiel 6: transparenter Silikon-Lack (erfindungsgemäß)

### Katalysator-Komponente

67,6 Gew.-% Hexamethyldisiloxan mit einer Viskosität von 0,5 mPa s
13,5 Gew.-% eines Polydimethylsiloxan-Öls mit einer Viskosität von 10 mPa s
18,9 Gew.-% eines Platin-Katalysators
werden vorgelegt und 30 Minuten lang homogen gemischt.

### Basis-Komponente

30,1 Gew.-% vinylendgestopptes Polydimethylsiloxan mit einer Viskosität von 10.000 mPa s
43,2 Gew.-% Hexamethyldisiloxan mit einer Viskosität von 0,5 mPa s
11,4 Gew.-% eines Polydimethylsiloxan-Öls mit einer Viskosität von 10 mPa s
13,0 Gew.-% einer pyrogenen Kieselsäure (oberflächenbehandelt) mit einer BET-Oberfläche zwischen 150 und 200 m²/g
2,2 Gew.-% eines Polymethylhydrogensiloxans mit einem SiH-Gehalt von 7,3 mmol/g
0,1 Gew.-% Polyethersiloxan, nämlich Trisiloxan
werden vorgelegt und 30 Minuten lang homogen gemischt.

### Mischung von Katalysator- und Basiskomponente

1 Teil der Katalysator-Komponente und 10 Teile der Basis-Komponente werden über einen statischen Mischer homogen gemischt. Es wird ein ausgehärteter Probekörper mit einer Endhärte von 25 Shore A erhalten. Die mechanischen Eigenschaften sind im Folgenden dargestellt: Reißdehnung: 342 %, Zugfestigkeit: 2,8 MPa, Kraft bei Bruch: 18,4 N, Weiterreißfestigkeit: 9,0 kN/m bei einer Dicke von 2,9 mm. Oberflächenspannung: 5*10⁹ Ω (antistatisch).

### Beispiel 7: transparenter Silikon-Lack (erfindungsgemäß)

### Katalysator-Komponente

67,6 Gew.-% Hexamethyldisiloxan mit einer Viskosität von 0,5 mPa s
13,5 Gew.-% eines Polydimethylsiloxan-Öls mit einer Viskosität von 10 mPa s
18,9 Gew.-% eines Platin-Katalysators
werden vorgelegt und 30 Minuten lang homogen gemischt.

### Basis-Komponente

30,1 Gew.-% vinylendgestopptes Polydimethylsiloxan mit einer Viskosität von 10.000 mPa s
43,2 Gew.-% Hexamethyldisiloxan mit einer Viskosität von 0,5 mPa s
11,3 Gew.-% eines Polydimethylsiloxan-Öls mit einer Viskosität von 10 mPa s
13,0 Gew.-% einer pyrogenen Kieselsäure (oberflächenbehandelt) mit einer BET-Oberfläche zwischen 150 und 200 m²/g
2,2 Gew.-% eines Polymethylhydrogensiloxans mit einem SiH-Gehalt von 7,3 mmol/g
0,2 Gew.-% Polyethersiloxan, nämlich Trisiloxan werden vorgelegt und 30 Minuten lang homogen gemischt.

### Mischung von Katalysator- und Basiskomponente

1 Teil der Katalysator-Komponente und 10 Teile der Basis-Komponente werden über einen statischen Mischer homogen gemischt. Es wird ein ausgehärteter Probekörper mit einer Endhärte von 25 Shore A erhalten. Die mechanischen Eigenschaften sind im Folgenden dargestellt: Reißdehnung: 340 %, Zugfestigkeit: 2,7 MPa, Kraft bei Bruch: 18,3 N, Weiterreißfestigkeit: 9,0 kN/m bei einer Dicke von 2,9 mm. Oberflächenspannung: 2*10⁹ Ω (antistatisch).

### Beispiel 8: transparenter Silikon-Lack (erfindungsgemäß)

### Katalysator-Komponente

67,6 Gew.-% Hexamethyldisiloxan mit einer Viskosität von 0,5 mPa s
13,5 Gew.-% eines Polydimethylsiloxan-Öls mit einer Viskosität von 10 mPa s
18,9 Gew.-% eines Platin-Katalysators
werden vorgelegt und 30 Minuten lang homogen gemischt.

### Basis-Komponente

30,1 Gew.-% vinylendgestopptes Polydimethylsiloxan mit einer Viskosität von 10.000 mPa s
43,2 Gew.-% Hexamethyldisiloxan mit einer Viskosität von 0,5 mPa s
11,2 Gew.-% eines Polydimethylsiloxan-Öls mit einer Viskosität von 10 mPa s
13,0 Gew.-% einer pyrogenen Kieselsäure (oberflächenbehandelt) mit einer BET-Oberfläche zwischen 150 und 200 m²/g
2,2 Gew.-% eines Polymethylhydrogensiloxans mit einem SiH-Gehalt von 7,3 mmol/g
0,3 Gew.-% Polyethersiloxan, nämlich Trisiloxan
werden vorgelegt und 30 Minuten lang homogen gemischt.

### Mischung von Katalysator- und Basiskomponente

1 Teil der Katalysator-Komponente und 10 Teile der Basis-Komponente werden über einen statischen Mischer homogen gemischt. Es wird ein ausgehärteter Probekörper mit einer Endhärte von 25 Shore A erhalten. Die mechanischen Eigenschaften sind im Folgenden dargestellt: Reißdehnung: 341 %, Zugfestigkeit: 2,7 MPa, Kraft bei Bruch: 18,4 N, Weiterreißfestigkeit: 9,0 kN/m bei einer Dicke von 2,9 mm. Oberflächenspannung: 2*10⁹ Ω (antistatisch).

## Patentansprüche

1. Ein zweikomponentiges, additionsvernetzendes Silikon, bei Raumtemperatur oder mit UV-Strahlung vernetzend, mindestens bestehend aus
(1) 0,1 - 70 Gew.-% Polyorganosiloxanen mit mindestens zwei ungesättigten Gruppen im Molekül
(2) 0,1 - 15 Gew.-% Polyorganosiloxanen mit mindestens zwei SiH-Gruppen im Molekül
(3) 0,1 - 10 Gew.-% Polyorganosiloxanen ohne reaktive Gruppen
(4) 0,01 - 2.0 Gew.-% Edelmetallkatalysator (je nach Anwendung UV-aktiv/inaktiv)
(5) 0,1 - 30 Gew.-% verstärkende Füllstoffe, mit beladener oder unbeladener Oberfläche
und
(6) 0,01 - 0,5 Gew.-% mindestens eines antistatischen Additivs, nämlich Polyether-modifizierte Siloxane die oberflächenaktive Trisiloxane sind.

2. Silikon nach Anspruch 1 mit zusätzlich einzeln oder zusammen
(1) bis zu 30 Gew.-% Öle oder andere Weichmacher und/oder
(2) bis zu 20 Gew.-% nichtverstärkenden Füllstoffen und/oder
(3) bis zu 1 Gew.-% Inhibitoren.

3. Silikon nach Anspruch 1 oder 2, **dadurch gekennzeichnet, dass** das antistatische Additive ein oberflächenaktives Trisiloxan ist.

4. Silikon-Lack, welcher sowohl raumtemperaturvernetzend als auch mit UV-Strahlung härtend ist und zur Oberflächenbeschichtung von Otoplastiken ohne eigene antistatische Eigenschaft bestimmt ist, bestehend aus:
(1) 0,1 - 50 Gew.-% Polyorganosiloxanen mit mindestens zwei ungesättigten Gruppen im Molekül
(2) 0,1 - 15 Gew.-% Polyorganosiloxanen mit mindestens zwei SiH-Gruppen im Molekül
(3) 0,1 - 10 Gew.-% Polyorganosiloxanen ohne reaktive Gruppen
(4) 0,01 - 2,0 Gew.-% Edelmetallkatalysator (Je nach Anwendung UV-aktiv/inaktiv)
(5) 0,1 - 30 Gew.-% verstärkende Füllstoffe, mit beladener oder unbeladener Oberfläche
(6) 0,1 - 50 Gew.-% organische Lösungsmittel
und
(7) mindestens 0,01 - 0,5 Gew.-% eines antistatischen Additivs, nämlich Polyether-modifizierte Siloxane die oberflächenaktive Trisiloxane sind.

5. Silikon-Lack nach Anspruch 4, welcher zusätzlich enthält:
bis zu 30 Gew.-% Öle oder andere Weichmacher und/oder
bis zu 20 Gew.-% nichtverstärkenden Füllstoffen und/oder
bis zu 1 Gew.-% Inhibitoren.

6. Silikon-Lack nach Anspruch 4 oder 5, **dadurch gekennzeichnet, dass** das antistatische Additiv ein oberflächenaktives Trisiloxan, oder eine Kombination aus oberflächenaktiven Trisiloxanen ist.

7. Silikon-Lack nach einem der Ansprüche 4 bis 6, **dadurch gekennzeichnet, dass** der antistatische Silikon-Lack zur Oberflächenbehandlung von Silikonen sowohl durch Pinsel- und Tauchverfahren als auch durch Sprühverfahren (manuell mittels Airbrush-Technik oder maschinell mit einer automatischen Lackieranlage) anwendbar ist.

## Claims

1. A two-component, addition-crosslinking silicone, crosslinking at room temperature or with UV radiation, consisting of at least
(1) 0.1 - 70% by weight of polyorganosiloxanes with at least two unsaturated groups in the molecule,
(2) 0.1 - 15% by weight of polyorganosiloxanes with at least two SiH groups in the molecule,
(3) 0.1 - 10 % by weight polyorganosiloxanes without reactive groups,
(4) 0.01 - 2.0 % by weight precious metal catalyst (UV-active/inactive, depending on application),
(5) 0.1 - 30% by weight of reinforcing fillers, with a loaded or unloaded surface, and
(6) 0.01 - 0.5% by weight of at least one antistatic additive, namely polyether-modified siloxanes which are surface-active trisiloxanes.

2. The silicone according to claim 1 with additionally, individually, or together,
(1) up to 30% by weight of oils or other plasticizers, and/or
(2) up to 20% by weight of non-reinforcing fillers, and/or
(3) up to 1% by weight of inhibitors.

3. The silicone according to claim 1 or 2, **characterized in that** the antistatic additive is a surface-active trisiloxane.

4. A silicone varnish, which is both room-temperature-curing and UV-curing and is intended for the surface coating of earmolds without inherent antistatic properties, consisting of:
(1) 0.1 - 50% by weight of polyorganosiloxanes with at least two unsaturated groups in the molecule,
(2) 0.1 - 15% by weight of polyorganosiloxanes with at least two SiH groups in the molecule,
(3) 0.1 - 10 % by weight polyorganosiloxanes without reactive groups,
(4) 0.01 - 2.0 % by weight precious metal catalyst (UV-active/inactive, depending on application),
(5) 0.1 - 30 % by weight reinforcing fillers, with loaded or unloaded surface,
(6) 0.1 - 50% by weight of organic solvents, and
(7) at least 0.01 - 0.5% by weight of an antistatic additive, namely polyether-modified siloxanes which are surface-active trisiloxanes.

5. The silicone varnish according to claim 4, which additionally contains
up to 30% by weight of oils or other plasticizers, and/or
up to 20% by weight of non-reinforcing fillers, and/or
up to 1% by weight of inhibitors.

6. The silicone varnish according to claim 4 or 5, **characterized in that** the antistatic additive is a surface-active trisiloxane or a combination of surface-active trisiloxanes.

7. The silicone varnish according to one of claims 4 to 6, **characterized in that** the antistatic silicone varnish can be used for the surface treatment of silicones both by brushing and dipping methods and by spraying methods (manually by airbrush technique or mechanically with an automatic painting system).

## Revendications

1. Silicone à deux composants, réticulant par addition, réticulant à température ambiante ou avec un rayonnement UV, consistant au moins en
(1) 0,1 - 70 % en poids de polyorganosiloxanes ayant au moins deux groupes insaturés dans la molécule,
(2) 0,1 - 15 % en poids de polyorganosiloxanes ayant au moins deux groupes SiH dans la molécule,
(3) 0,1 - 10 % en poids de polyorganosiloxanes sans groupes réactifs,
(4) 0,01 - 2,0 % en poids de catalyseur à base de métal noble (actif/inactif sous UV, selon l'application),
(5) 0,1 - 30 % en poids de charges renforçantes, avec surface chargée ou non chargée, et
(6) 0,01 - 0,5 % en poids d'au moins un additif antistatique, à savoir des siloxanes modifiés par des polyéthers qui sont des trisiloxanes tensioactifs.

2. Silicone selon la revendication 1 avec en outre, séparément ou ensemble
(1) jusqu'à 30 % en poids d'huiles ou d'autres plastifiants, et/ou
(2) jusqu'à 20 % en poids de charges non renforçantes, et/ou
(3) jusqu'à 1 % en poids d'inhibiteurs.

3. Silicone selon la revendication 1 ou 2, **caractérisé en ce que** l'additif antistatique est un trisiloxane tensioactif.

4. Vernis silicone, qui est à la fois réticulable à la température ambiante et durcissable par rayonnement UV et qui est destiné au revêtement de surface d'embouts auriculaires sans propriété antistatique propre, consistant en
(1) 0,1 - 50 % en poids de polyorganosiloxanes ayant au moins deux groupes insaturés dans la molécule,
(2) 0,1 - 15 % en poids de polyorganosiloxanes ayant au moins deux groupes SiH dans la molécule,
(3) 0,1 - 10 % en poids de polyorganosiloxanes sans groupes réactifs,
(4) 0,01 - 2,0 % en poids de catalyseur à base de métal noble (actif/inactif sous UV, selon l'application),
(5) 0,1 - 30 % en poids de charges renforçantes, avec surface chargée ou non chargée,
(6) 0,1 - 50 % en poids de solvants organiques, et
(7) au moins 0,01 - 0,5 % en poids d'un additif antistatique, à savoir des siloxanes modifiés par des polyéthers qui sont des trisiloxanes tensioactifs.

5. Vernis silicone selon la revendication 4, qui contient en outre:
jusqu'à 30 % en poids d'huiles ou d'autres plastifiants, et/ou
jusqu'à 20 % en poids de charges non renforçantes, et/ou
jusqu'à 1 % en poids d'inhibiteurs.

6. Vernis silicone selon la revendication 4 ou 5, **caractérisé en ce que** l'additif antistatique est un tensioactif trisiloxane, ou une combinaison de tensioactifs trisiloxanes.

7. Vernis silicone selon l'une des revendications 4 à 6, **caractérisé en ce que** le vernis silicone antistatique est applicable pour le traitement de surface des silicones aussi bien par pinceau et par trempage que par pulvérisation (manuellement par la technique de l'aérographe ou mécaniquement avec une installation de peinture automatique).
